# EUROPÄISCHE PATENTSCHRIFT

(11) **EP 0 908 637 B1**
(45) Veröffentlichungstag und Bekanntmachung des Hinweises auf die Patenterteilung: **18.12.2002**
(21) Anmeldenummer: 98118990.5
(22) Anmeldetag: 08.10.1998
(51) Int. Cl.: F16B 37/02, F16L 3/10, F16B 39/36, F16B 37/08

(54) **Mutter und Rohrschelle**
Nut and pipe clamp
Ecrou et collier de serrage

(30) Priorität: 10.10.1997 DE 29718042 U; 28.05.1998 DE 19823830; 15.09.1998 DE 19842171
(43) Veröffentlichungstag der Anmeldung: 14.04.1999
(73) Patentinhaber: Sinn, Edgar Emil, 56587 Strassenhaus (DE)
(72) Erfinder: Sinn, Edgar Emil, 56587 Strassenhaus (DE)
(74) Vertreter: Haber, Jan Wilhelm

(56) Entgegenhaltungen:
- DE-A- 3 807 001
- DE-A- 3 913 354
- DE-C- 19 516 145
- GB-A- 668 686

## Beschreibung

Die Erfindung betrifft eine Mutter zum Befestigen auf einer Schraube oder einer Gewindestange, wobei die Mutter eine Schraubenaufnahme mit einer Gewindebohrung zur Aufnahme der Schraube oder der Gewindestange und mindestens einen die Mutterwand der Schraubenaufnahme durchtrennenden Schlitz aufweist, der die Schraubenaufnahme in mindestens zwei Bereiche unterteilt.

Es sind die verschiedensten Arten von Muttern bekannt. Werden diese auf eine längere Schraube oder auf einer Gewindestange aufgeschraubt, so benötigt das Drehen der Schraube über eine größere Länge der Gewindestange viel Zeit.

Um diese Zeit zu verkürzen wurde in der deutschen Offenlegungsschrift DE 38 07 001 A1 eine Mutter gemäß der eingangs genannten Art vorgeschlagen. Die hierin beschriebene Vorrichtung dient zur Verbindung von zwei Werkstücken, die jeweils einen Durchgang enthalten, durch den jeweils die Schraube-Mutter-Anordnung hindurchzuführen ist. Um das Einfädeln der Schraube in den ersten Gewindegang der Mutter zu erleichtern und das anfängliche Schrauben an sich zu vermeiden kann die Schraube mit ihren ersten Gewindegängen begrenzt in die ersten Gewindegänge der Mutter eingedrückt werden.

Diese Möglichkeit des axialen Eindrückens der Schraube in die Mutter ist jedoch nur auf einen sehr geringen Eindrückweg beschränkt. Beim Eindrücken der Schraube müssen die das Innengewinde aufweisenden Teile der Schraubenaufnahme radial nach außen federn, um ein Durchdrücken der radial außen liegenden Gewindespitzen des Außengewindes der Schraube zu ermöglichen. Der radial nach außen maximal mögliche Federweg ist aber durch die in den Durchgang des ersten Werkstücks eingreifenden Ansatzstücke der Mutter beschränkt. Die Ansatzstücke können nicht über den äußeren Umfang des Durchgangs hinaus nach außen sich bewegen. Vielmehr geraten das Außengewinde der Schraube und das Innengewinde der Mutter bei weiterem Eindrücken der Schraube in die Mutter zunehmend in festeren Eingriff. Der Ansatz der Mutter wird dabei zunehmend stärker zusammengedrückt, so dass eine rein axiale Verschiebbewegung mit der Schraube relativ zur Mutter nicht nur in Richtung einer Zugkraft zum Lösen der Verbindung, sondern auch in Richtung einer Druckkraft zum weiteren Schließen der Verbindung unmöglich ist. Um die gewünschte endgültige Festigkeit der Schraubenverbindung zu erhalten muss die Schraube daher in üblicher Weise weiter in die Mutter eingeschraubt werden.

Aus der deutschen Offenlegungsschrift DE 39 13 354 A1 ist ferner ein Befestigungselement für Schraubenverbindungen bekannt, das ohne ein eigentliches Gewinde arbeitet. Die in das Außengewinde einer Schraube eingreifenden Elemente bestehen jeweils nur aus einem Endabschnitt eines gefalzten Blechstreifens, so dass sich insgesamt noch nicht einmal ein vollständiger Gewindegang der Blechmutter ergibt. Mit einer derartigen Blechmutter können die insbesondere zur Befestigung einer Rohrschelle erforderlichen Festigkeiten bzw. Haltekräfte nicht erreicht werden. Insbesondere können derartige Befestigungselemente auch nicht im Schwerlastbereich angewendet werden, während die Mutter gemäß der vorliegenden Erfindung durch die Vorsehung einer Gewindebohrung mit einem mehrere Gewindegänge aufweisenden Gewinde auch im Schwerlastbereich Anwendung finden kann.

Aus der britischen Patentschrift GB 668 686 ist ebenfalls ein Befestigungselement mit einem durch mehrere Schlitze in mehrere Bereiche unterteilten Gewinde bekannt. Die Beweglichkeit der einzelnen Gewindesegmente radial nach außen ist jedoch durch eine außen um die einzelnen Segmente herum gelegte Feder unterbunden. Diese Feder verhindert das für ein Eindrücken einer Schraube erforderliche radiale Ausschwenken der Gewindebereiche.

Aus der deutschen Patentschrift DE 195 16 145 C1 ist ferner eine Rohrschelle bekannt, bei der ein Mutterdübel zum Einsatz kommt, bei dem sich beim Eindrehen einer Schraube zwei Spreizbacken hinter der Öffnung einer festen Halbschale der Rohrschelle verspreizen. Die Schraube muß dabei in den Spreizdübel bzw. Mutterdübel eingeschraubt werden. Ein Eindrücken der Schraube ist nicht möglich.

Eine Rohrschelle ist darüber hinaus beispielsweise auch aus der deutschen Gebrauchsmusterschrift DE-GM 77 00 802 bekannt. Sie besteht aus einem ringförmigen Schellenkörper, dessen erstes Ende einen nach außen offenen Einschnitt für den Eingriff der Spannschraube aufweist, während sich in dem zweiten nach außen gerichteten Ende eine Gewindebohrung befindet, in die die Spannschraube einschraubbar ist.

Nachteilig ist bei dieser bekannten Rohrschelle vor allem, dass die Montage der Schelle um ein zu befestigendes Rohr in der Regel sehr zeitaufwendig ist, weil die relativ lange Spannschraube mittels eines Schraubenziehers so lange gedreht werden muss, bis die Rohrschelle gespannt ist.

Aus der DE 34 39 418 A1 ist ferner eine Rohrschelle bekannt, bei der zur Durchführung einer einfachen Montage das zweite nach außen gerichtete Ende des Schellenkörpers als separates Winkelstück ausgebildet ist, welches schwenkbar an dem Schellenkörper befestigt wird. Auch bei dieser bekannten Rohrschelle muss zum Spannen der Schelle die Spannschraube zeitaufwendig in die entsprechende Mutter hineingedreht werden.

Aufgabe der vorliegenden Erfindung ist es, eine Mutter der eingangs genannten Art bereitzustellen, die bei einfacher Konstruktion, preiswerter Herstellbarkeit und leichter Handhabbarkeit eine schnelle und einfache Befestigung der Mutter auch über einen großen Längsbereich einer Schraube bzw. einer Gewindestange lediglich durch Aufbringen einer axialen Druckkraft und ohne eine Eindrehbewegung der Schraube ermöglicht.

Diese Aufgabe wird erfindungsgemäß durch eine Vorrichtung nach Anspruch 1 gelöst. Vorteilhafte Weiterbildungen und bevorzugte Ausgestaltungen der Erfindung ergeben sich aus den abhängigen Ansprüchen.

Wesentlich bei der erfindungsgemäßen Lösung ist, daß die Bereiche der Schraubenaufnahme an nach innen federnden Haltebügeln angeordnet sind, die derart geformt sind, daß ein mittels der Mutter zu verbindendes bzw. zu befestigendes Werkstück, insbesondere ein Ende einer Rohrschelle, von außen derart umgreifbar ist, daß die Bereiche der Schraubenaufnahme auseinanderdrückbar sind, wobei der Durchmesser der Gewindebohrung der Mutter bei einem vom Außen- oder Innengewinde erzeugten radialen Innendruck so weit vergrößerbar ist, daß der axiale Halt zwischen Mutter und Schraube bzw. Gewindestange zeitweise nicht mehr gegeben ist.

Der Hauptvorteil besteht dabei darin, daß durch eine derartige Anordnung der Bereiche der Schraubenaufnahme an nach innen federnden Haltebügeln, die das zu verbindende Werkstück bzw. die miteinander zu verbindenden Werkstücke von außen umgreifen, der Weg, um den die Bereiche radial nach außen gedrückt werden können, nicht durch einen äußeren Anschlag begrenzt ist. Dadurch wird ein vollständiges Eindrücken der Schraube ermöglicht, ohne dass eine zusätzliche Dreh- bzw. Schraubbewegung erforderlich ist. Hierdurch kann die Schraube besonders schnell und einfach bis in ihre endgültige Befestigungsposition in die Mutter eingedrückt werden. Das Eindrücken der Schraube ist somit nicht wie bei der vorbekannten Ausführungsform nur auf die ersten Gewindegänge beschränkt.

Zusätzlich kann die Schraube natürlich nach wie vor auch in die Mutter eingedreht werden. Insbesondere ist es möglich, die Schraube erst nach dem schnellen Eindrücken in die Mutter mit wenigen abschließenden Umdrehungen festzuziehen. Ein ausreichender Halt der Mutter beim Festziehen ist dadurch gegeben, dass die auseinanderdrückbaren Bereiche (Segmente) der Mutter durch die federnden Haltebügel nach Innen beaufschlagt sind.

Als Einsatzgebiete gelten vorzugsweise die Befestigungstechnik, die Schwingungstechnik, die Betätigungstechnik und die Normteilebereiche.

Besonders vorteilhaft ist es, wenn mindestens zwei die Mutterwand der Schraubenaufnahme durchtrennende Schlitze vorgesehen sind, die die Schraubenaufnahme in mindestens zwei von einander getrennte Bereiche unterteilen.

Besonders vorteilhaft ist es ferner, wenn jeder Bereich der Schraubenaufnahme an einem eigenen Haltebügel angeordnet ist.

Besonders vorteilhaft ist es ferner, wenn die Haltebügel jeweils durch eine Federklammer gebildet sind.

Besonders vorteilhaft ist es ferner, wenn die Haltebügel bzw. die Federklammern mit einem Ende jeweils an einem Bereich der Mutterwand befestigt, insbesondere angeformt sind.

Besonders vorteilhaft ist es ferner, wenn die Haltebügel bzw. die Federklammern mit ihrem anderen Ende an einem Ring befestigt, insbesondere angeformt sind, der neben der Mutter auf der Gewindestange oder auf der Schraube angeordnet ist.

Besonders vorteilhaft ist es ferner, wenn die freien Enden der Bereiche der Schraubenaufnahme radial nach außen vorstehen und als Paar aneinander anliegen.

Besonders vorteilhaft ist es ferner, wenn die Mutter in der Seitenansicht ringförmig ausgebildet ist, wobei in ihrer der Schraubenaufnahme gegenüberliegenden Seite eine Durchlassöffnung für die Schraube vorgesehen ist. Besonders vorteilhaft ist es ferner, wenn die Bereiche der Schraubenaufnahme zusammen einen Gewindehals mit mehreren Gewinderillen bilden. Auf diese Weise kann eine besonders haltbare Verbindung zwischen Spannschraube und Mutter gewährleistet werden.

Besonders vorteilhaft ist es dabei ferner, wenn der Gewindehals mit einem sich von der Innenwand der Mutter nach außen leicht konisch erweiternden Durchlaß für die Spannschraube versehen ist. Dadurch wird ein besonders leichtgängiges Durchrutschen der Spannschraube durch die Mutter beim Spannen der Rohrschelle erreicht.

Um eine relativ große Spannkraft bei der Befestigung zu erreichen und trotzdem eine gute Clipswirkung beim Eindrücken der Spannschraube sicherzustellen, hat sich als Material für die Mutter insbesondere Federstahl als vorteilhaft erwiesen. Sofern geringere Anforderungen an die Spannkraft der Rohrschelle gestellt werden, kann die Mutter aber auch aus einem anderen Material, z.B. aus Kunststoff, bestehen.

Als Federclip kann das Spannelement aus Federstahl gehärtet sein und galvanisch verzinkt mit großer Maßgenauigkeit ausgeführt werden.

In besonders vorteilhafter Weise ist die Mutter bei einer Rohrschelle verwendbar. Der Vorteil der Durchstoßtechnik wirkt sich hierbei besonders stark aus, da oftmals relativ lange Spannschrauben verwendet werden, die bei der herkömmlichen Montage einen großen Zeitaufwand bedeuten.

Die Erfindung betrifft insofern auch eine Rohrschelle mit einem Schellenkörper, dessen beide Enden nach außen gerichtet sind und eine mittels einer Spannschraube und einer Mutter der zuvor beschriebenen Art verschließbare Öffnung begrenzen, wobei die beiden Enden jeweils eine Ausnehmung für die Durchführung des Schaftes der Spannschraube aufweisen, und wobei die Mutter mit ihren Haltebügeln bzw. mit ihren Federklammern das zweite Ende des Schellenkörpers derart umgreift, daß die Spannschraube mit der Mutter sowohl durch Einschrauben als auch clipsartig durch Druck mit einer vorgebbaren Kraft auf den Schraubenkopf verbindbar ist, wobei die Schraube ohne Verdrehung gegenüber der Mutter axial verschieblich und an der Mutter einrastbar ist. Ein späteres Öffnen der Rohrschelle erfolgt dann, wie bei bekannten Rohrschellen auch, durch Herausdrehen der Spannschraube.

Besonders vorteilhaft ist es dabei, wenn die Mutter im Bereich der Schraubenaufnahme durch zwei Schlitze geteilt ausgebildet ist, derart, daß die beiden Hälften der Schraubenaufnahme bei einem Druck auf den Schraubenkopf der Spannschraube federnd auseinandergebogen werden und ein Durchrutschen der Spannschraube erlauben.

Besonders vorteilhaft ist es ferner, wenn die Ausnehmung des ersten Endes des Schellenkörpers einen nach außen offenen Einschnitt bildet.

Besonders vorteilhaft ist es ferner, wenn der Abstand der - in Richtung der Spannschraube gesehen - gegenüberliegenden inneren Oberflächen der ringförmigen Mutter und/oder die Ausnehmung in dem zweiten Ende insbesondere des Schellenkörpers eine vorgebbare Beweglichkeit der Spannschraube zulassen.

Besonders vorteilhaft ist es ferner, wenn die Mutter, insbesondere an der der Schraubenaufnahme abgewandten bzw. gegenüberliegenden Seite, mindestens eine Nase aufweist, die in die Ausnehmung des zweiten Endes des Schellenkörpers hineinragt.

Besonders vorteilhaft ist es dabei ferner, wenn die Mutter an der Schraubenaufnahme abgewandten bzw. gegenüberliegenden Seite eine Öffnung aufweist, deren Seiten die Nasen bilden.

Besonders vorteilhaft ist es dabei ferner, wenn die Nase(n) mindestens eine schräge Auflauffläche zum Einrasten in die Ausnehmung des zweiten Endes des Schellenkörpers aufweist.

Weitere Einzelheiten und Vorteile der Erfindung werden im folgenden anhand von in Figuren dargestellten Ausführungsbeispielen erläutert. Es zeigen:
- Figur 1: Eine perspektivische Ansicht einer erfindungsgemäßen Rohrschelle mit separat dargestellter Spannschraube und Mutter;
- Figur 2: die Figur 1 entsprechende Rohrschelle nach dem Einlegen eines Rohres;
- Figur 3: die Figur 2 entsprechende Ansicht beim Spannen der Rohrschelle durch Eindrücken der Spannschraube in die Mutter;
- Figur 4: einen Querschnitt durch die Rohrschelle im Bereich der Mutter beim Spannen der Rohrschelle;
- Figur 5a-d: eine Mutter mit Nasen zum Halt an dem Klemmende;
- Figur 6: an einem Ring über Federklammern befestigte Mutter im aufgebogenen Zustand;
- Figur 7: die Klammern nach Figur 6 im zugebogenen Zustand;
- Figur 8: die Mutter nach Figur 7 im aufgeschraubten Zustand

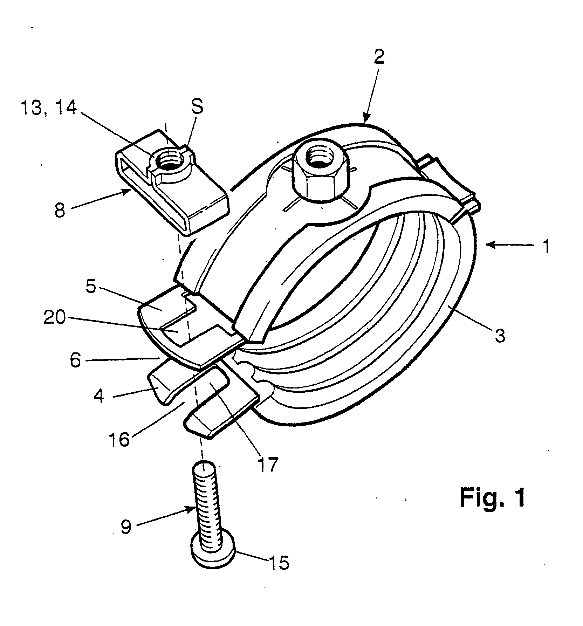

In Figur 1 ist mit 1 eine erfindungsgemäße Rohrschelle bezeichnet, die einen an sich bekannten ringförmigen Schellenkörper 2 und eine die Innenseite des Schellenkörpers abdeckende elastische Gummieinlage 3 umfasst. Der Schellenkörper 2 ist bei dem dargestellten Ausführungsbeispiel zweiteilig ausgebildet und setzt sich aus zwei halbrunden Bügeln zusammen, die scharnierartig mittels einer Steckverbindung in an sich bekannter Weise miteinander verbunden sind.

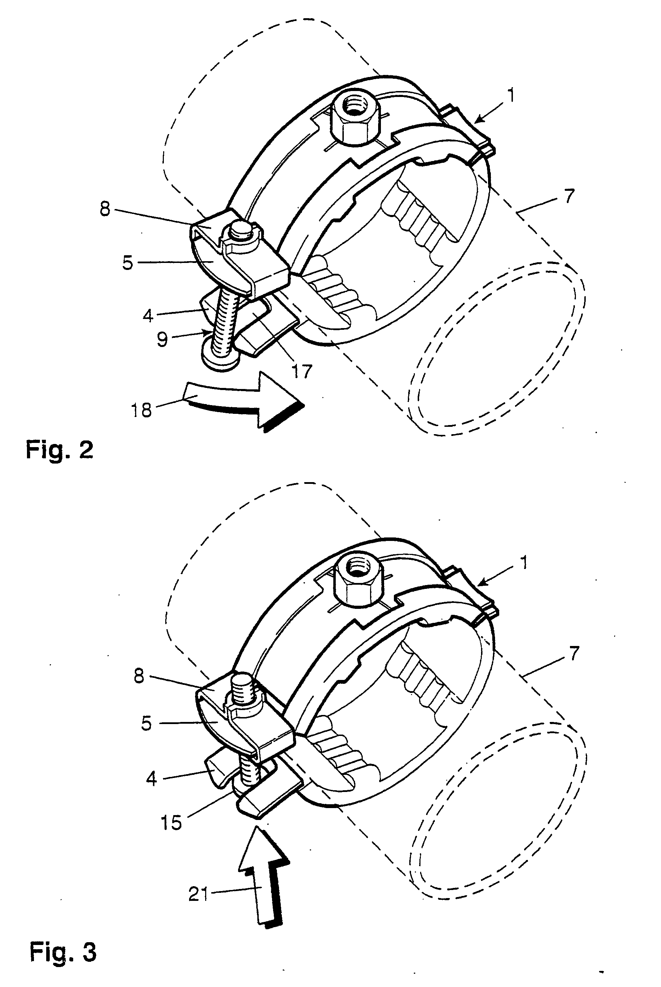

Sowohl das erste Ende 4 als auch das zweite Ende 5 des Schellenkörpers 2 sind nach außen gerichtet und begrenzen eine Öffnung 6, durch welche hindurch das jeweils zu befestigende und in den Figuren 2 und 3 gestrichelt angedeutete Rohr 7 eingeführt wird, und die mittels einer in eine Mutter 8 einschraubbare Spannschraube 9 verschließbar ist.

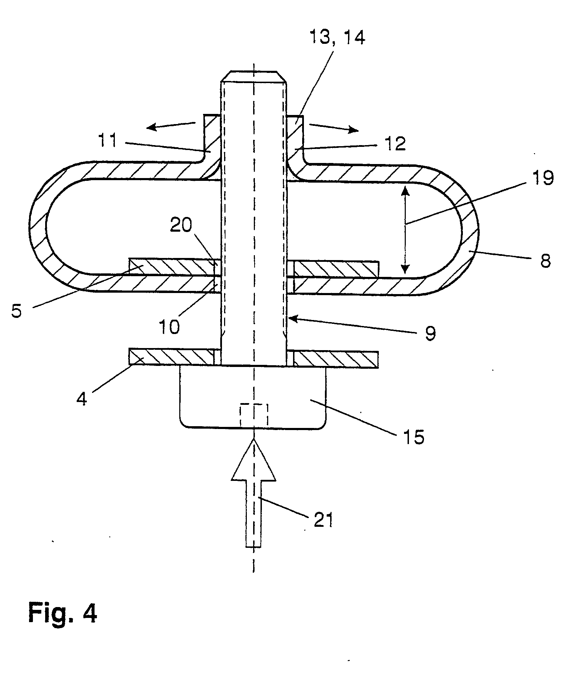

Die Mutter 8 ist ringförmig ausgebildet und besteht aus Federstahl. Sie weist auf ihrer dem ersten Ende 4 des Schellenkörpers 2 zugewandten Seite eine Durchlassöffnung 10 für die Spannschraube 9 auf (Figur 4). Auf ihrer der ersten Seite 4 des Schellenkörpers abgewandten Seite sind die beiden Enden 11, 12 der Mutter 8 hochgebogen und bilden jeweils zur Hälfte den Gewindehals 13 einer Schraubenaufnahme 14, so dass die Mutter 8 im Bereich der Schraubenaufnahme 14 geteilt ausgebildet ist. Durch die Teilung der Schraubenaufnahme 14 wird erreicht, dass die beiden Hälften bei einem Druck auf den Schraubenkopf 15 der Spannschraube 9 federnd auseinandergebogen werden und ein Durchrutschen der Spannschraube erlauben.

Im folgenden wird das Spannen der Rohrschelle 1 kurz erläutert:

Zunächst werden die beiden halbrunden Bügel der Rohrschelle in an sich bekannter Weise um das Rohr 7 herumgeklappt. Anschließend wird zur Vormontage der Rohrschelle 1 die Spannschraube 9, die bereits in die an dem zweiten Ende 5 des Schellenkörpers 2 angeordnete Mutter 8 eingeschraubt ist, über einen Einschnitt 16 (Figur 1) in eine Ausnehmung 17 des ersten Endes 4 des Schellenkörpers 2 gedrückt (dieses ist in Figur 2 durch den Richtungspfeil 18 angedeutet). Um dabei eine möglichst schnelle Vormontage der Rohrschelle 1 zu erreichen, müssen sowohl der Abstand 19 (Figur 4) der - in Richtung der Spannschraube 9 gesehen - gegenüberliegenden inneren Oberflächen der ringförmigen Mutter 8 als auch die Ausnehmung 20 in dem zweiten Ende 5 des Schellenkörpers 2 eine vorgebbare Beweglichkeit (d.h. ein seitliches Verkanten) der Spannschraube 9 zulassen.

Nach der Vormontage der Rohrschelle 1 erfolgt das eigentliche Spannen der Rohrschelle durch einen Druck mit einer vorgebbaren Kraft auf den Schraubenkopf 15 in Richtung des in Figur 3 mit 21 bezeichneten Richtungspfeils. Dabei werden die Enden 11, 12 der Mutter 8 federnd auseinandergedrückt. Sobald die Druckkraft nachlässt, legen sich die Gewinderillen der beiden Enden um das Gewinde der Spannschraube 9 und verrasten diese, so dass die Schraube in ihrer jeweiligen Lage fixiert bleibt.

Sofern erforderlich, kann ein Nachspannen der Rohrschelle 1 durch ein weiteres Eindrehen der Spannschraube 9 mittels eines Schraubenziehers erfolgen.

Die Erfindung ist selbstverständlich nicht auf das vorstehend beschriebene Ausführungsbeispiel beschränkt. So muss die Schraubenaufnahme 14 beispielsweise kein exakt zylindrisches Gewinde aufweisen, sondern kann einen sich von der Innenwand der Mutter 8 nach außen leicht konisch erweiternden Durchlass besitzen. Durch diese Maßnahme kann der beim Spannen der Rohrschelle 1 erforderliche Druck auf den Schraubenkopf 15 verringert werden. Dabei wirken zunächst nur die innenseitigen Gewinderillen der Mutter. In dem Maße, wie die Spannschraube 9 angezogen wird, ändert sich der Konus und passt sich dem Gewindehals der (im wesentlichen zylindrischen) Spannschraube 9 an, so dass auch die übrigen Gewinderillen der Mutter 8 in das Gewinde der Schraube 9 eingreifen.

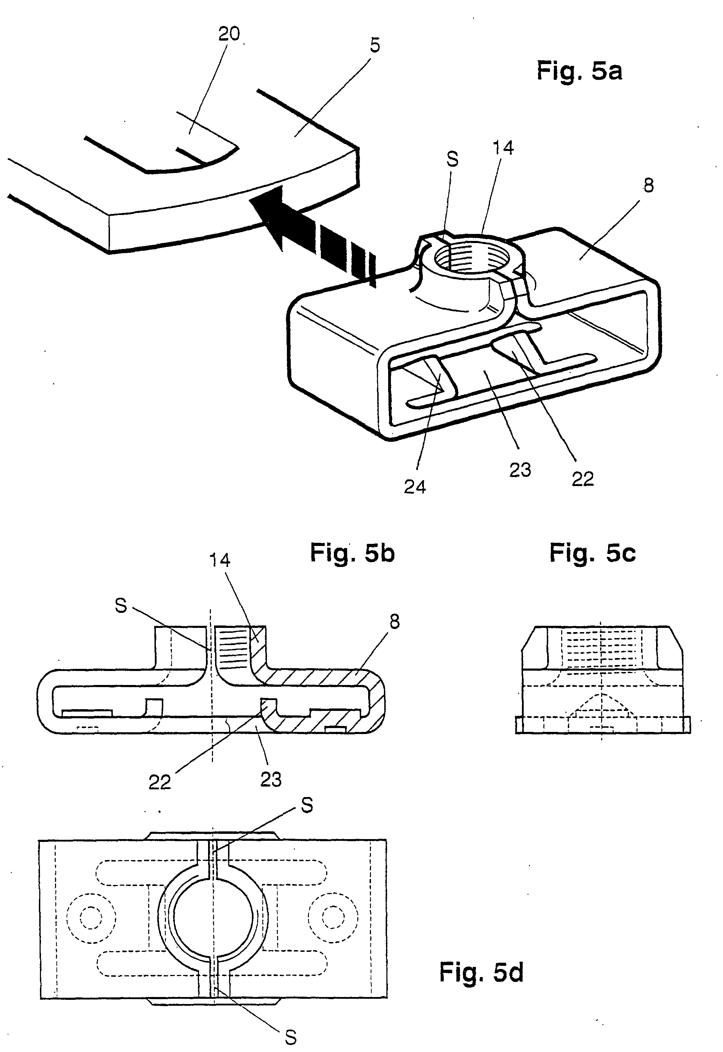

Die Ausführung nach Figur 5a-d zeigt eine Mutter mit ein oder zwei Nasen 22, die an einer Öffnung 23 der Mutter zur Schraubenaufnahme 14 hin vorspringt, um in die Ausnehmung 20 des zweiten Endes 5 einzurasten. Hierzu weisen die Nasen 22 schräge Auflaufflächen 24 auf, damit die Mutter bei fehlender Schraube vom zweiten Ende 5, 9 nicht abgleiten kann.

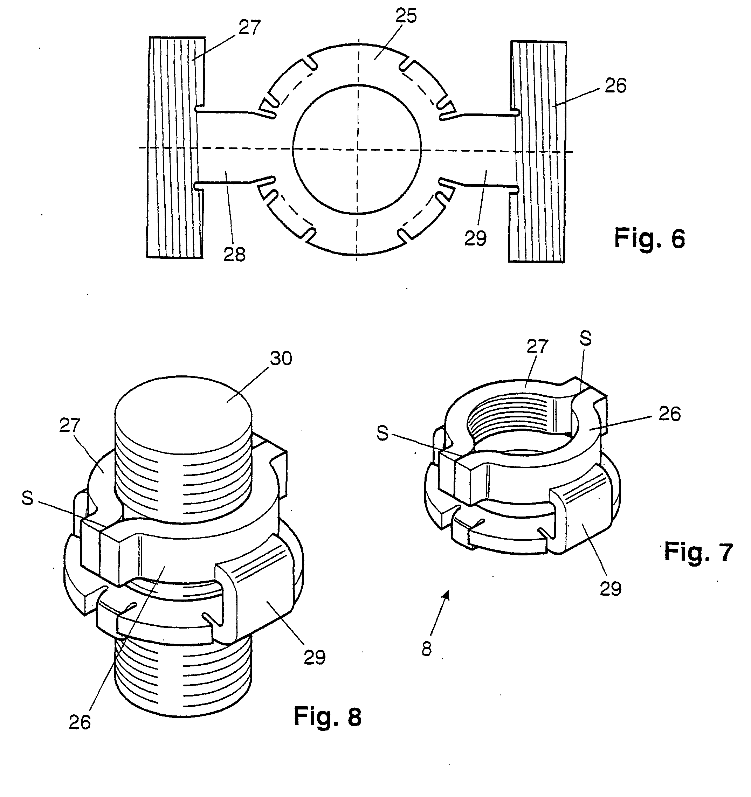

Nach den Figuren 6 bis 8 sind zwei Gewindehälften 26, 27 einer Mutter 8 über federnde Haltebügel bzw. Zungen 28, 29 an einem Ring 25 befestigt. Die Gewindehälften 26, 27 bilden dabei die Bereiche der Schraubenaufnahme, die an den nach innen federnden Haltebügeln 28, 29 angeordnet sind. Auch hierbei kann ein mittels der Mutter 8 zu verbindendes bzw. zu befestigendes Werkstück durch die federnden Haltebügel 28 und 29 von außen derart umgriffen werden, daß die Gewinehälften 26, 27 bzw. die Bereiche der Schraubenaufnahme auseinanderdrückbar sind, so daß ein vollständiges Eindrücken der Schraube oder Gewindestange 30 ohne zusätzliche Dreh- bzw. Schraubbewegung ermöglicht wird. Ein wesentlicher Unterschied zu den Ausführungsformen der Figuren 1 bis 5d besteht darin, daß die die Durchgangsöffnung für die Schraube 30 enthaltende Grundfläche nicht viereckig, sondern rund ausgebildet ist.

## Patentansprüche

1. Mutter (8) zum Befestigen auf einer Schraube (9, 30) oder einer Gewindestange (9a), wobei die Mutter (8) eine Schraubenaufnahme (14) mit einer Gewindebohrung zur Aufnahme der Schraube (9, 30) oder der Gewindestange (9a) und mindestens einen die Mutterwand der Schraubenaufnahme (14) durchtrennenden Schlitz (S) aufweist, der die Schraubenaufnahme (14) in mindestens zwei Bereiche (11, 12, 26, 27) unterteilt,
**dadurch gekennzeichnet,**
**daß** die Bereiche (11, 12, 26, 27) der Schraubenaufnahme (14) an nach innen federnden Haltebügeln angeordnet sind, die derart geformt sind, daß ein mittels der Mutter (8) zu verbindendes bzw. zu befestigendes Werkstück (5), insbesondere ein Ende (5) einer Rohrschelle (1), von außen derart umgreifbar ist, daß die Bereiche (11, 12, 26, 27) der Schraubenaufnahme (14) auseinanderdrückbar sind, wobei der Durchmesser der Gewindebohrung der Mutter (8) bei einem vom Außen- oder Innengewinde erzeugten radialen Innendruck so weit vergrößerbar ist, daß der axiale Halt zwischen Mutter (8) und Schraube (9, 30) bzw. Gewindestange (9a) zeitweise nicht mehr gegeben ist.

2. Mutter nach Anspruch 1, **dadurch gekennzeichnet , daß** mindestens zwei die Mutterwand der Schraubenaufnahme (14) durchtrennende Schlitze (S) vorgesehen sind, die die Schraubenaufnahme (14) in mindestens zwei von einander getrennte Bereiche (11, 12) unterteilen.

3. Mutter nach Anspruch 1 oder 2, **dadurch gekennzeichnet, daß** jeder Bereich (11, 12) der Schraubenaufnahme (14) an einem eigenen Haltebügel angeordnet ist.

4. Mutter nach einem der vorherigen Ansprüche, **dadurch gekennzeichnet, daß** die Haltebügel durch Federklammer (28, 29) gebildet sind.

5. Mutter nach einem der vorherigen Ansprüche, **dadurch gekennzeichnet, daß** die Haltebügel bzw. die Federklammern (28, 29) mit einem Ende jeweils an einem Bereich (11, 12) der Mutterwand befestigt, insbesondere angeformt sind.

6. Mutter nach Anspruch 5, **dadurch gekennzeichnet , daß** die Haltebügel bzw. die Federklammern (28, 29) mit ihrem anderen Ende an einem Ring (25) befestigt, insbesondere angeformt sind, der neben der Mutter (8) auf der Gewindestange (9a) oder auf der Schraube (9) angeordnet ist.

7. Mutter nach einem der vorgenannten Ansprüche, **dadurch gekennzeichnet, daß** die freien Enden der Bereiche (11, 12) der Schraubenaufnahme (14) radial nach außen vorstehen und als Paar aneinander anliegen.

8. Mutter nach einem der vorherigen Ansprüche, **dadurch gekennzeichnet, daß** die Schraube (9) mit der Mutter (8) ein einseitiges Formgesperre oder ein- oder zweiseitiges Formgehemme bildet.

9. Mutter nach einem der vorherigen Ansprüche, **dadurch gekennzeichnet, daß** die Mutter (8) ringförmig ausgebildet ist, wobei in ihrer der Schraubenaufnahme (14) gegenüberliegenden Seite eine Durchlassöffnung (10) für die Schraube (9) vorgesehen ist.

10. Mutter nach einem der vorherigen Ansprüche, **dadurch gekennzeichnet, daß** die Bereiche (11, 12) der Schraubenaufnahme (14) zusammen einen Gewindehals (13) mit mehreren Gewinderillen bilden.

11. Mutter nach Anspruch 10, **dadurch gekennzeichnet, daß** der Gewindehals (13) mit einem sich von der Innenwand der Mutter (8) nach außen leicht konisch erweiternden Durchlaß für die Spannschraube (9) versehen ist.

12. Mutter nach einem der vorherigen Ansprüche, **dadurch gekennzeichnet, daß** die Mutter (8) aus Federstahl besteht.

13. Rohrschelle (1) mit einem Schellenkörper (2), dessen beide Enden (4, 5) nach außen gerichtet sind und eine mittels einer Spannschraube (9) und einer Mutter (8) nach einem der vorherigen Ansprüche verschließbare Öffnung (6) begrenzen, wobei die beiden Enden (4, 5) jeweils eine Ausnehmung (17, 20) für die Durchführung des Schaftes der Spannschraube (9) aufweisen, **dadurch gekennzeichnet, daß** die Mutter (8) mit ihren Haltebügeln bzw. mit ihren Federklammern (28, 29) das zweite Ende (5) des Schellenkörpers (2) derart umgreift, daß die Spannschraube (9) mit der Mutter (8) sowohl durch Einschrauben als auch clipsartig durch Druck mit einer vorgebbaren Kraft auf den Schraubenkopf (15) verbindbar ist, wobei die Schraube (9) ohne Verdrehung gegenüber der Mutter (8) axial verschieblich und an der Mutter (8) einrastbar ist.

14. Rohrschelle nach Anspruch 13, **dadurch gekennzeichnet, daß** die Mutter (8) im Bereich der Schraubenaufnahme (14) durch zwei Schlitze (S) geteilt ausgebildet ist, derart, daß die beiden Hälften der Schraubenaufnahme (14) bei einem Druck auf den Schraubenkopf (15) der Spannschraube (9) federnd auseinandergebogen werden und ein Durchrutschen der Spannschraube (9) erlauben.

15. Rohrschelle nach Anspruch 13 oder 14, **dadurch gekennzeichnet, daß** die Ausnehmung (17) des ersten Endes (4) des Schellenkörpers (2) einen nach außen offenen Einschnitt (16) bildet.

16. Rohrschelle nach einem der Ansprüche 13 bis 15, **dadurch gekennzeichnet, daß** der Abstand (19) der - in Richtung der Spannschraube (9) gesehen - gegenüberliegenden inneren Oberflächen der ringförmigen Mutter 8 und/oder die Ausnehmung (20) in dem zweiten Ende (5) insbesondere des Schellenkörpers (2) eine vorgebbare Beweglichkeit der Spannschraube zulassen.

17. Rohrschelle nach einem der Ansprüche 13 bis 16, **dadurch gekennzeichnet, daß** die Mutter (8), insbesondere an der der Schraubenaufnahme (14) abgewandten bzw. gegenüberliegenden Seite, mindestens eine Nase (22) aufweist, die in die Ausnehmung (20) des zweiten Endes (5) des Schellenkörpers (2) hineinragt.

18. Rohrschelle nach Anspruch 17, **dadurch gekennzeichnet, daß** die Mutter (8) an der Schraubenaufnahme (14) abgewandten bzw. gegenüberliegenden Seite eine Öffnung (23) aufweist, deren Seiten die Nasen (22) bilden.

19. Rohrschelle nach einem der Ansprüche 17 oder 18, **dadurch gekennzeichnet, daß** die Nase(n) (22) mindestens eine schräge Auflauffläche zum Einrasten in die Ausnehmung (20) des zweiten Endes (5) des Schellenkörpers (2) aufweist.

## Claims

1. Nut (8) for attaching to a screw (9, 30) or a threaded rod (9a), where the nut (8) exhibits a screw intake (14) with a thread boring to accept the screw (9, 30) or the threaded rod (9a) and at least one slit (S) separating screw intake (4), dividing the screw intake (14) into at least two sections (11, 12, 26, 27),
**characterized by the fact**
that the sections (11, 12, 26, 27) of the screw intake (14) are aligned towards retaining clips springing inwards, which are shaped in such a way that a workpiece (5) to be attached or fixed by means of the nut (8), particularly an end (5) of a pipe clamp (1), is to be capable of being encompassed from outside in such a way that the sections (11, 12, 26, 27) of the screw intake (14) can be pushed apart, where the diameter of the thread boring of the nut (8) can be enlarged so far, during a radial inner pressure created by the external or internal thread, that the axial hold between the nut (8) and the screw (9,30) or threaded rod (9a) is temporarily no longer present.

2. Nut in accordance with Claim 1, **characterized by the fact** that at least two slits (S) separating the nut wall of the screw intake (14), which divide the screw intake (14) into at least two sections (11,12) separated from each other, are planned.

3. Nut in accordance with Claim 1 or 2, **characterized by the fact** that each section (11, 12) of the screw intake (14) is aligned to its own retaining clip.

4. Nut in accordance with one of the previous Claims,
**characterized by the fact** that the retaining clips are formed by spring clips (28, 29).

5. Nut in accordance with one of the previous Claims,
**characterized by the fact** that the retaining clips or spring clips (28, 29), each with an end fixed to a section (11, 12) of the nut wall, are specially shaped to it.

6. Nut in accordance with Claim 5,
**characterized by the fact** that, at their other end, the retaining clips or spring clips (28, 29) are attached and specially shaped to a ring (25) that is arranged next to the nut (8) on the threaded rod (9a) or on the screw (9).

7. Nut in accordance with one of the previous Claims,
**characterized by the tact** that the free ends of the sections (11, 12) of the screw intake (14) project outwards radially and lie next to each other as a pair.

8. Nut in accordance with one of the previous Claims,
**characterized by the fact** that the screw (9) forms a one-sided shape locking mechanism or a one-sided or two-sided shape block with the nut (8).

9. Nut in accordance with one of the previous Claims,
**characterized by the fact** that the nut (8) is shaped like a ring, where an opening (10) for the screw (9) is planned in the side of the nut facing the screw intake (14).

10. Nut in accordance with one of the previous Claims,
**characterized by the fact** that the areas (11, 12) of the screw intake (14) together form a thread collar (13) with several screw thread undercuts.

11. Nut in accordance with Claim 10, **characterized by the fact** that the thread collar (13) is planned with an opening widening slightly outwards from the inner wall of the nut (8) for the tension screw (9).

12. Nut in accordance with one of the previous Claims,
**characterized by the fact** that the nut (8) is made of spring steel.

13. Pipe clamp (1) with a clamp body (2), both ends (4, 5) of which are aligned outwards and restrict an opening (6) that can be closed by means of a tension screw (9) and a nut (8) in accordance with one of the previous Claims, where both ends (4,5) exhibit a recess (17,20) to take the shaft of the tension screw (9), **characterized by the fact** that the nut (8) encompasses the second end (5) of the clamp body (2) with its retaining clips or spring clips (28,29) in such a way that the tension screw (9) can be connected to the nut (8) both by screwing it in and by pressure with a predetermined force on the screw head (15), like a clamp, where the screw (9) can be engaged without turning against the nut (8) and at the nut (8) in an axially adjustable way.

14. Pipe clamp in accordance with Claim 13,
**characterized by the fact** that the nut (8) is shaped with a division by two slits (S) in the section of the screw intake (14), in such a way that both halves of the screw intake (14) are sprung apart at a pressure on the screw head (15), allowing the tension screw (9) to slip through.

15. Pipe clamp in accordance with Claim 13 or 14,
**characterized by the fact** that the recess (17) of the first end (4) of the clamp body (2) forms an incision (16) opening outwards.

16. Pipe clamp in accordance with one of the Claims 13 to 15,
**characterized by the fact** that - seen in the direction of the tension screw (9) - the clearance (19) of the opposite inner surfaces of the ring-shaped nut (8) and/or the recess (20) in the second end (5), particularly of the clamp body (2), allow(s) a predetermined mobility of the tension screw.

17. Pipe clamp in accordance with one of the Claims 13 to 16,
**characterized by the fact** that the nut (8) exhibits at least one lug (22) projecting into the recess (20) of the second end (5) of the clamp body (20), particularly on the side turning away from or opposite to the screw intake (14).

18. Pipe clamp in accordance with Claim 17,
**characterized by the fact** that the nut (8) exhibits an opening on the side turning away from or opposite to the screw intake (14). The sides of this opening form the lugs (22),

19. Pipe clamp in accordance with one of the Claims 17 or 18,
**characterized by the fact** that the lug(s)(22) exhibit(s) at least one sloping approach surface for engaging in the recess (20) of the second end (5) of the clamp body (2).

## Revendications

1. Écrou (8) à fixer sur une vis (9, 30) ou sur une tige filetée (9a), où l'écrou présente (8) un logement de vis (14) avec un trou taraudé pour recevoir la vis (9, 30) ou la tige filetée (9a) et au moins une encoche (S) séparant la paroi de l'écrou du logement de vis (14), qui divise le logement de vis (14) en deux sections au minimum (11, 12, 26, 27), **et caractérisé par le fait**
**que** les sections (11, 12, 26, 27) du logement de vis (14) sont disposées sur des étriers de retenue faisant ressort vers l'intérieur, qui ont une forme telle qu'une pièce (5) à relier ou à fixer à l'aide de l'écrou (8), en particulier l'extrémité (5) d'un collier de tuyau (1), peut être enveloppée de l'extérieur de sorte que les sections (11, 12, 26, 27) du logement de vis (14) puissent être comprimées ensemble et que, sous l'effet d'une pression interne radiale exercée par le filetage extérieur ou intérieur, le diamètre du trou taraudé de l'écrou (8) puisse être agrandi pour que la retenue axiale ne soit plus assurée temporairement entre l'écrou (8) et la vis (9, 30) ou la tige filetée (9a).

2. L'écrou conforme à la spécification 1, **est caractérisé par le fait qu'**au moins deux fentes (S) séparant la paroi de l'écrou du logement de vis (14) sont prévues et divisent le logement de vis (14) en deux sections distinctes au minimum (11, 12).

3. L'écrou conforme à la spécification 1 ou 2, **est caractérisé par le fait que** chaque section (11, 12) du logement de vis (14) est disposée sur son propre étrier de retenue.

4. L'écrou conforme à une des précédentes spécifications, **est caractérisé par le fait que** les étriers de retenue sont formés par des étriers à ressort (28, 29).

5. L'écrou conforme à une des précédentes spécifications, **est caractérisé par le fait que** les étriers de retenue ou les étriers à ressort (28, 29) sont formés avec une extrémité fixée sur une section (11, 12) de la paroi de l'écrou.

6. L'écrou conforme à la spécification 5, **est caractérisé par le fait que** les étriers de retenue ou les étriers à ressort (28, 29) sont formés avec leur autre extrémité fixée sur une bague (25), qui est située à côté de l'écrou (8) sur la tige filetée (9a) ou sur la vis (9).

7. L'écrou conforme à une des précédentes spécifications, **est caractérisé par le fait que** les extrémités libres des sections (11, 12) du logement de vis (14) avancent radialement vers l'extérieur et s'ajustent par paire.

8. L'écrou conforme à une des précédentes spécifications, **est caractérisé par le fait que** la vis (9) forme avec l'écrou (8), un dispositif de blocage moulé unilatéral ou un dispositif d'arrêt unilatéral ou bilatéral.

9. L'écrou conforme à une des précédentes spécifications, **est caractérisé par le fait que** l'écrou (8) a une forme de bague, où une ouverture de passage (10) pour la vis (9) est prévue du côté opposé au logement de vis (14).

10. L'écrou conforme à une des précédentes spécifications, **est caractérisé par le fait que** les sections (11, 12) du logement de vis (14) forment un col fileté (13) avec plusieurs gorges de filet.

11. L'écrou conforme à la spécification 10, **est caractérisé par le fait que** le col fileté (13) est pourvu d'un diamètre admissible pour la vis de serrage (9) qui s'étend vers l'extérieur de manière légèrement conique, à partir de la paroi inteme de l'écrou (8).

12. L'écrou conforme à une des précédentes spécifications, **est caractérisé par le fait que** l'écrou (8) est composé d'acier à ressort.

13. Le collier de tuyau (1) avec un corps de serrage (2), dont les deux extrémités (4, 5) sont orientées vers l'extérieur et, conformément à une des spécifications précédentes, limitent une ouverture verrouillable (6) à l'aide d'une vis de serrage (9) et d'un écrou (8), où les deux extrémités (4, 5) présentent respectivement un creux (17, 20) pour le passage de la tige de la vis de serrage (9), **est caractérisé par le fait que** l'écrou (8) avec ses étriers de retenue ou à ressort (28, 29) enveloppe la seconde extrémité (5) du corps de serrage (2) de sorte que la vis de serrage (9) peut être raccordée avec l'écrou (8), par vissage ou par clipsage, en exerçant une pression avec une force prédéfinie sur la tête de vis (15), où la vis (9) peut suivre un déplacement axial, sans effort de torsion par rapport à l'écrou (8) et s'engager dans l'écrou (8).

14. Le collier de tuyau conforme à la spécification 13, **est caractérisé par le fait que** l'écrou (8) est divisé en deux fentes (S) au niveau du logement de vis (14), de sorte que les deux extrémités du logement de vis (14) se contractent lorsqu'une pression est exercée sur la tête de vis (15) de la vis de serrage (9) et permettent ainsi le glissement de la vis de serrage (9).

15. Le collier de tuyau conforme à la spécification 13 ou 14, **est caractérisé par le fait que** le creux (17) de la première extrémité (4) du corps de serrage (2) forme une encoche ouverte vers l'extérieur (16).

16. Le collier de tuyau conforme aux spécifications 13 à 15, **est caractérisé par le fait que** les distances (19) (vue en direction de la vis de serrage (9)) entre les surfaces intérieures opposées de l'écrou en forme de bague 8 et/ou le creux (20) dans la seconde extrémité (5) du corps de serrage en particulier (2), permettent un mouvement prédéfini de la vis de serrage.

17. Le collier de tuyau conforme aux spécifications 13 à 15, **est caractérisé par le fait que** l'écrou (8), situé en particulier sur le côté opposé du logement de vis (14), présente au moins un nez (22), qui entre dans le creux (20) de la seconde extrémité (5) du corps de serrage (2).

18. Le collier de tuyau conforme à la spécification 17, **est caractérisé par le fait que** l'écrou (8) situé sur le côté opposé du logement de vis (14) présente une ouverture (23) dont les côtés forment les nez (22).

19. Le collier de tuyau conforme à une des spécifications 17 ou 18, **est caractérisé par le fait que** le ou les nez (22) présentent au moins une surface de contact oblique pour être introduits dans le creux (20) de la seconde extrémité (5) du corps de serrage (2).
